# EUROPEAN PATENT SPECIFICATION

(11) **EP 1 925 372 B1**
(45) Date of publication and mention of the grant of the patent: **09.12.2009**
(21) Application number: 05783611.6
(22) Date of filing: 16.09.2005
(51) Int. Cl.: B08B 5/04

(54) **ANCHOR BOLT HOLE CLEANING DEVICE**
VORRICHTUNG ZUR REINIGUNG EINES ANKERBOLZENLOCHS
DISPOSITIF DE NETTOYAGE POUR TROU D INSTALLATION DE BOULON D ANCRAGE

(43) Date of publication of application: 28.05.2008
(73) Proprietor: KABUSHIKI KAISHA MIYANAGA, Miki-shi, Hyogo 673-0433 (JP)
(72) Inventor: MIYANAGA, Masaaki, Miki-shi, Hyogo 673-0521 Japan (JP)
(74) Representative: Leinweber & Zimmermann
(86) International application number: PCT/JP2005/017171
(87) International publication number: WO 2007/032084

(56) References cited:
- DE-A1- 19 757 424
- DE-U1- 8 513 348
- DE-U1- 9 407 149
- DE-U1- 9 407 163
- DE-U1-202004 014 800
- JP-U- 3 004 844
- JP-U- 7 015 210
- JP-U- 63 074 266
- JP-U- 64 017 388

## Description

### Technical Field

The present invention relates to an anchor bolt hole cleaning device suitable for cleaning cutting powder, etc. in an anchor bolt hole. Document DE -A-19757424 discloses an anchor bolt hole cleaning device from the prior art,

### Background Art

In the case of fixing a device or the like on a concrete surface, an anchor bolt hole is drilled on the concrete surface using a vibrating drill or the like, and an anchor bolt is planted in the anchor bolt hole. Thus, the device or the like is fixed on the concrete surface.
There are so-called a resin anchor and a mortar anchor, in which the anchor bolt is planted in the anchor bolt hole by an adhesive force of resin or mortar filled between the anchor bolt hole and the anchor bolt. In the present DESCRIPTION and CLAIMS, these anchors may be collectively and simply called "resin anchor".

In the case of the resin anchor, if there are cutting powder and dust inside the anchor bolt hole (on an inner peripheral surface and a bottom portion), a resistance of the anchor bolt to a pull-out force deteriorates significantly.

Therefore, it is necessary that cutting powder, etc. do not remain in the drilled anchor bolt hole, that is, it is necessary that foreign matters (simply referred to as "cutting powder" in the present DESCRIPTION and CLAIMS) such as cutting powder do not get in between the anchor bolt hole and an outer peripheral surface of the anchor bolt.

On this account, various anchor bolt hole cleaning devices have been provided. Specifically, provided is a device which scrapes out cutting powder, etc. by inserting into the drilled anchor bolt hole a rod-like cleaning tool with a brush disposed on its periphery (see Patent Document 1). Moreover, provided is a device which scrapes out cutting powder, etc., adhered to the inner peripheral surface of the anchor bolt hole, by a brush of a cleaning tool which is made by disposing the brush on a periphery of a core rod and on an upper end portion of which a cover is formed, and suctions the scraped cutting powder from a suction opening (see Patent Document 2).
Patent Document 1: Japanese Utility Model Application Publication 07-15210
Patent Document 2: Japanese Utility Model Application Publication 64-17388

### Disclosure of the Invention

### Problems to be Solved by the Invention

However, although the device described in Patent Document 1 excels in that its configuration is simple, it cannot adequately scrape out fine cutting powder, especially fine cutting powder accumulated on the bottom portion.

Moreover, although the device described in Patent Document 2 can suction fine cutting powder from the suction opening, it is difficult to scrape out comparatively large cutting powder accumulated on the bottom portion by its brush or suctioning.

In view of these circumstances, an object of the present inventor is to provide an anchor bolt hole cleaning device which has a simple configuration, can scrape out cutting powder adhered to the inner peripheral surface of the anchor bolt hole, and can also effectively scrape out both fine and comparatively large cutting powder accumulated on the bottom portion.

### Means for Solving the Problems

The above object of the present invention can be achieved by the anchor bolt hole cleaning device having the following configuration.

An anchor bolt hole cleaning device according to the present invention is provided with a brush on a peripheral portion thereof and is capable of cleaning cutting powder adhered to a hole inner peripheral surface, the anchor bolt hole cleaning device comprises a suction nozzle which is able to be inserted into an anchor bolt hole to suction the cutting powder, the suction nozzle includes a main body that is a tubular body, a suction opening formed at a tip end portion of the main body, and an exhaust opening which is formed at a base end portion of the main body to be connected to a tip end of a suction hose whose base end is connected to a suction opening of a suction device, and the brush is disposed on an outer peripheral surface of the main body.

In accordance with the anchor bolt hole cleaning device according to the present invention having the above-described configuration, the cutting powder adhered to the inner peripheral surface of the anchor bolt hole can be scraped and dropped to the bottom portion side by the brush disposed on the outer peripheral surface of the main body of the suction nozzle inserted into the anchor bolt hole such that the tip end of the suction nozzle faces the bottom side of the hole, and the scraped cutting powder and the cutting powder accumulated on the bottom portion of the hole can be suctioned toward the suction device side from the suction opening formed at the tip end portion of the suction nozzle.
Therefore, the cutting powder can be effectively removed from the anchor bolt hole.
In addition, a conventional case requires three steps of suctioning the cutting powder by the suction nozzle after the drilling of the anchor bolt hole, scraping and dropping the cutting powder adhered to the inner peripheral surface of the hole, and again suctioning the scraped cutting powder by the suction nozzle. However, in accordance with the anchor bolt hole cleaning device according to the present invention, all the cutting powder, etc. in the hole is surely suctioned outside by so-called one-touch cleaning in which the tip end of the suction nozzle is simply inserted into the anchor bolt hole, and the cutting powder, etc. adhered to the inner peripheral surface of the hole is scraped and dropped by the brush disposed on the outer peripheral surface of the main body. Therefore, the cleaning operation can be carried out extremely effectively, some steps can be omitted, and a workload of a worker can be reduced.

Moreover, in the anchor bolt hole cleaning device according to the present invention, in a case where the suction opening is formed at a tip end of the main body, the cutting powder, etc. accumulated on the bottom portion of the hole can be effectively sectioned outside from the suction opening since the suction opening opens toward the bottom portion of the hole.

Further, in the anchor bolt hole cleaning device according to the present invention, in a case where the brush is disposed on the outer peripheral surface of the main body in a spiral manner, the cutting powder adhered to the hole inner peripheral surface can be effectively scraped and dropped on the bottom portion of the hole by rotating the suction nozzle in the hole.

Furthermore, in the anchor bolt hole cleaning device according to the present invention, even in a case where a plurality of the brush having a ring shape are disposed at different levels of height on the outer peripheral surface of the main body, the cutting powder adhered to the inner peripheral surface of the hole can be effectively scraped and dropped on the bottom portion of the hole by moving the suction nozzle upward and downward and can suction the cutting powder.

### Effects of the Invention

In accordance with the anchor bolt hole cleaning device according to the present invention having the above-described configuration, it is possible to realize an anchor bolt hole cleaning device which has a simple configuration, can scrape out cutting powder adhered to the inner peripheral surface of the anchor bolt hole, and can also effectively scrape out both fine and comparatively large cutting powder accumulated on the bottom portion.

### Brief Description of the Drawings

[Fig. 1] Fig. 1 is a side view showing the entire configuration of a suction nozzle of an anchor bolt hole cleaning device according to an embodiment of the present invention.
[Fig. 2] Fig. 2 is a side view showing the entire configuration of the suction nozzle of the anchor bolt hole cleaning device according to an embodiment different from that of Fig. 1.

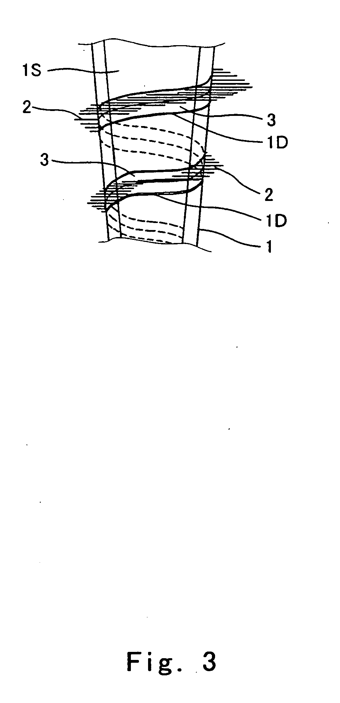

[Fig. 3] Fig. 3 is an enlarged partial side view showing the configuration of a portion where a brush of the suction nozzle shown in Fig. 2 is disposed.
[Fig. 4] Fig. 4 is a side view showing the entire configuration of the suction nozzle of the anchor bolt hole cleaning device according to an embodiment different from those of Figs. 1 and 2.
[Fig. 5] Fig. 5 is a conceptual diagram showing a state where the anchor bolt hole is cleaned using the anchor bolt hole cleaning device having the suction nozzle of the embodiment shown in Fig. 1.
[Fig. 6] Fig. 6 is a side view showing the entire configuration of the suction nozzle of the anchor bolt hole cleaning device according to an embodiment different from those of Figs. 1, 2 and 4.
[Fig. 7] Fig. 7 is an enlarged partial side view showing the configuration of a tip end portion of the suction nozzle.

### Explanation of Reference Numbers

- A: anchor bolt hole cleaning device
- B: suction nozzle
- 1: main body
- 1S: outer peripheral surface
- 2: brush
- 1A: suction opening
- 1B: exhaust opening
- 7: suction device
- 7a: suction opening
- 8: anchor bolt hole
- 8S: hole inner peripheral surface
- 9: suction hose

### Best Mode for Carrying Out the Invention

### Embodiment 1

Hereinafter, an anchor bolt hole cleaning device according to an embodiment of the present invention will be specifically explained with reference to the drawings.

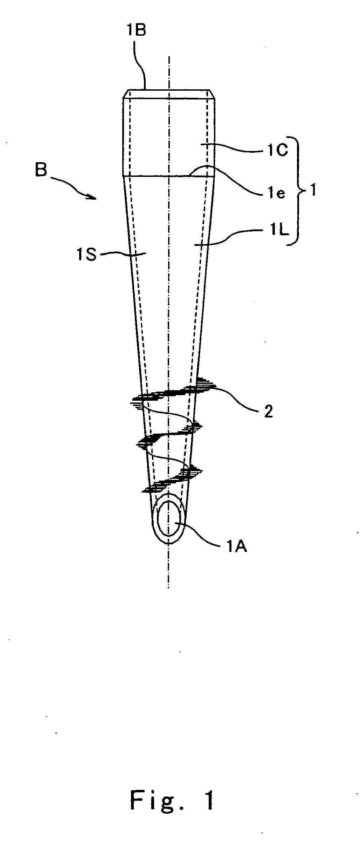

Fig. 1 is a side view showing the entire configuration of a suction nozzle of the anchor bolt hole cleaning device according to an embodiment of the present invention.

An anchor bolt hole cleaning device A according to the embodiment of the present invention includes a suction nozzle B shown in Fig. 1. The suction nozzle (hereinafter may be simply referred to as "nozzle") B includes a main body 1 that is a tubular body, and a brush 2 disposed on an outer peripheral surface 1S of the main body 1 along a longitudinal direction.

At a tip end of the main body 1, a suction opening 1A is formed, which opens obliquely with respect to the longitudinal direction. At a base end of the main body 1, an exhaust opening 1B is formed, which opens in a direction perpendicular to the longitudinal direction. The main body 1 includes a base end portion 1C that is a straight tubular shape, and a portion 1L which extends from a lower end 1e of the base end portion 1C to the suction opening 1A below the lower end 1e and is a tapered tubular body whose diameter gradually decreases in a downward direction.

Although the material of the suction nozzle B is not especially limited, it is preferable to use plastic in light of weight reduction and mass production at low cost.

As shown in Fig. 1, in Embodiment 1, the brush 2 is disposed only at a lower end portion of the tapered tubular body of the main body 1. However, the brush 2 may be disposed so as to extend up to a position on the base end side above the position shown in Fig. 1.

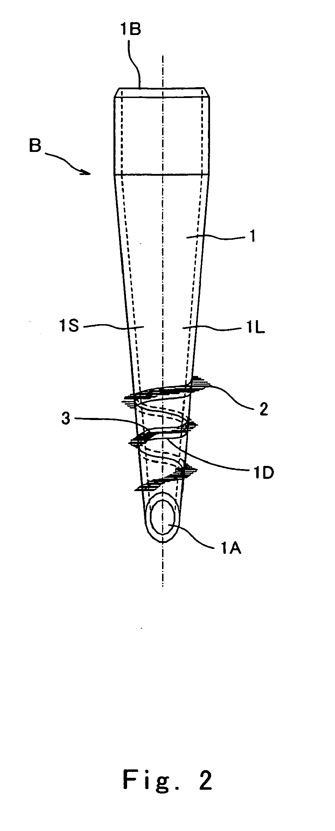

Moreover, in Embodiment 1 shown in Fig. 1, the brush 2 is disposed on the outer peripheral surface 1S of the main body 1 in a spiral manner. As shown in Fig. 1, in the case of forming the main body 1 with a mold or the like, the brush 2 may be directly disposed on the outer peripheral surface 1S of the main body 1. Alternatively, as shown in Fig. 2, in the case of integral molding, a spiral groove 1D may be formed on the outer peripheral surface of the main body 1, and then a band-like body 3 with the brush 2 disposed on its surface may be put in the groove 1D by adhesion, fitting, or the like. This is preferable since the integral molding of the main body 1 can be carried out easily.

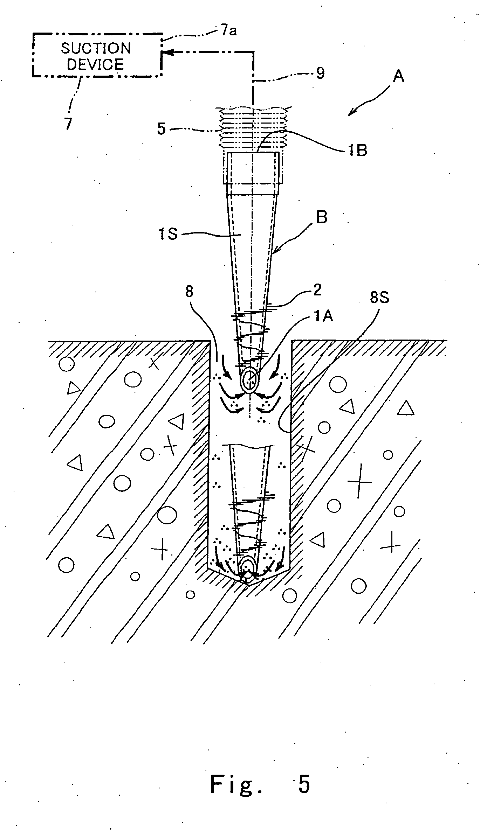

When in use, a tip end of an accordion hose 5 is connected to the exhaust opening 1B of the main body 1 as shown in Fig. 5, and a base end of the hose 5 is connected to a suction opening 7a of a suction device (a vacuum cleaner is used as the suction device in Embodiment 1) 7 via a conventional hose 9.
As shown in Fig. 5, after drilling an anchor bolt hole 8 with a concrete drill or the like, the nozzle B is inserted in the anchor bolt hole 8 such that the suction opening 1A is directed toward the hole (the suction opening 1A is located on the lower end side in Fig. 5). In this state, by turning on a switch of the suction device 7, cutting powder, etc. in the anchor bolt hole 8 is suctioned from the suction opening 1A. The cutting powder adhered to an inner peripheral surface 8S of the anchor bolt hole 8 can be scraped and dropped to the hole bottom portion from the inner peripheral surface 8S of the hole by the brush 2 by causing the nozzle B to move upward and downward, rotate, etc., if necessary, and the scraped cutting powder, etc. is suctioned from the suction opening 1A together with the cutting powder accumulated on the hole bottom portion.

As a result, the cutting powder, etc. in the anchor bolt hole 8 is effectively suctioned outside the hole from the suction opening 1A through the exhaust opening 1B, and the cutting powder, etc. do not remain in the hole.

Therefore, in a case where an anchor bolt (not shown) is planted in the anchor bolt hole 8 in this state, and resin or mortar is filled in a gap therebetween, a desired resistance to the pull-out force can be obtained since there are no cutting powder between the anchor bolt and the anchor bolt hole.

As described above, since all the cutting powder can be quickly and easily suctioned from the anchor bolt hole 8, the anchor bolt hole cleaning device is especially preferable in the case of forming so-called chemical anchor or mortar anchor. To be specific, in the case of the chemical anchor and the mortar anchor, the presence or absence of the cutting powder, etc. remaining in the anchor bolt hole 8 significantly affects the performance of the filler, and also significantly affects the resistance of the anchor bolt to the pull-out force. However, in the preset anchor bolt hole cleaning device A, since the cutting powder, etc. in the hole are removed surely and effectively, the cutting powder does not mix with the filler, the filler is effectively filled between the anchor bolt hole 8 and the anchor bolt (not shown), thereby obtaining the desired high resistance to the pull-out force.

### Embodiment 2

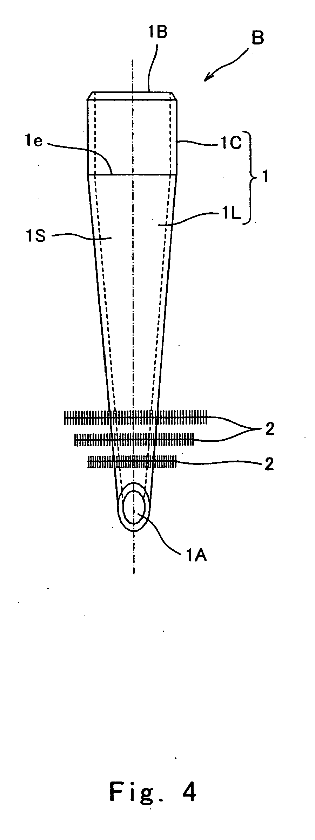

As another embodiment regarding the nozzle B, as shown in Fig. 4, ring-like brushes 2 may be disposed at different levels of height on the outer peripheral surface 1S of the main body 1.

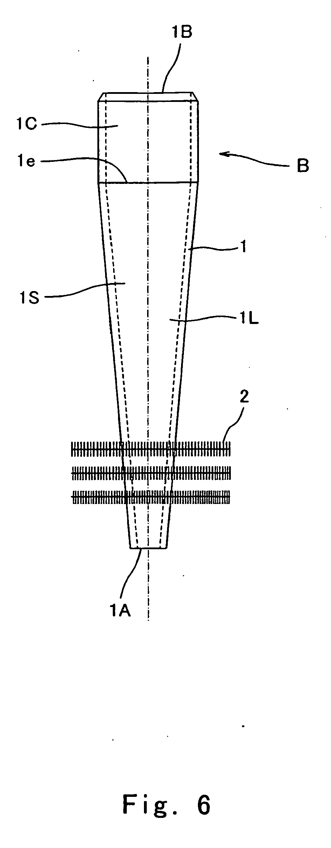

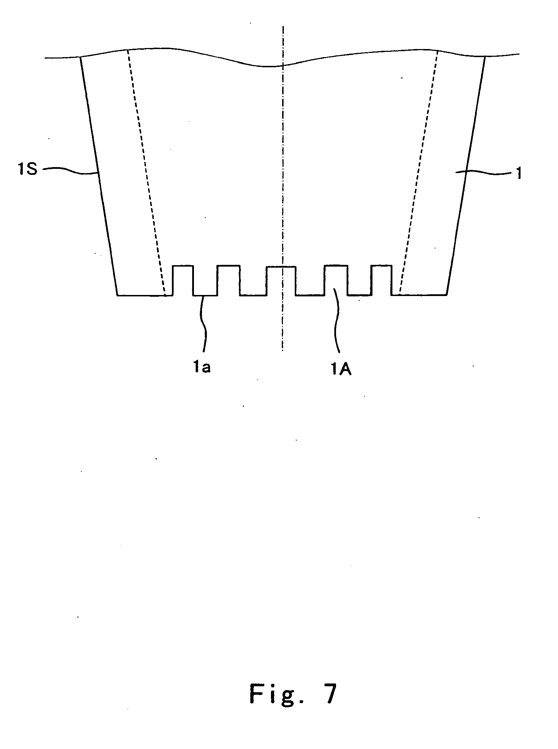

In the anchor bolt hole cleaning device shown in Figs. 1, 2 and 4, the suction opening 1A opens obliquely with respect to the longitudinal direction (see a direction of a central axis shown by a chain line). However, as shown in Fig. 6, the suction opening 1A may open so as to be perpendicular to the longitudinal direction. In such a case, as shown in Fig. 7, some concave-convex portions may be formed on an opening end surface 1a of the suction opening 1A so that the suction is effectively carried out even in a state in which the suction opening 1A contacts the bottom surface, etc. of the hole. Note that in Figs. 6 and 7, the same reference numbers are used to denote the same or corresponding components as in Figs. 1, 2 and 4, and detailed explanations thereof are omitted.

Although the foregoing described that the cutting powder adhered to the inner peripheral surface 8S of the hole is scraped and dropped to the hole bottom portion by the brush 2, it goes without saying that the brush 2 may scrape out the cutting powder outside the anchor bolt hole 8 depending on the type of usage.

### Industrial Applicability

An anchor bolt hole cleaning device according to the present invention can be used for, for example, cleaning an anchor bolt hole, etc.

## Claims

1. An anchor bolt hole cleaning device which is provided with a brush on a peripheral portion thereof and is capable of cleaning cutting powder adhered to a hole inner peripheral surface,
the anchor bolt hole cleaning device comprising a suction nozzle which is able to be inserted into an anchor bolt hole to suction the cutting powder,
the suction nozzle including a main body that is a tubular body, a suction opening formed at a tip end portion of the main body, and an exhaust opening which is formed at a base end portion of the main body to be connected to a tip end of a suction hose whose base end is connected to a suction opening of a suction device, wherein the brush is disposed on an outer peripheral surface of the main body. and **characterised in that**
the suction opening is formed at a tip end of the main body so as to open obliquely with respect to the longitudinal direction.

2. The anchor bolt hole cleaning device according to claim 1, wherein the main body includes a base end portion that is a straight tubular shape, and a portion which extends from a lower end of the base end portion to the suction opening below the lower end and is a tapered tubular body whose diameter gradually decreases in a downward direction.

3. The anchor bolt hole cleaning device according to claim 1 or 2, wherein the brush is disposed on the outer peripheral surface of the main body in a spiral manner.

4. The anchor bolt hole cleaning device according to claim 1 or 2, wherein a plurality of the brush having a ring shape are disposed at different levels of height on the outer peripheral surface of the main body.

## Patentansprüche

1. Vorrichtung zur Reinigung eines Ankerbolzenlochs, die auf einem peripheren Abschnitt derselben mit einer Bürste versehen ist und die in der Lage ist, eine periphere innenfläche eines Lochs von daran haftendem Bohrmehl zu reinigen,
wobei die Vorrichtung zur Reinigung eines Ankerbolzenlochs eine Saugdüse umfasst, die in ein Ankerbolzenloch eingeführt werden kann, um das Bohrmehl abzusaugen,
wobei die Saugdüse einen Hauptkörper, der ein röhrenförmiger Körper ist, eine Saugöffnung, die an einem Spitzenendabschnitt des Hauptkörpers geformt ist, und eine Ablassöffnung beinhaltet, die an einem Basisendabschnitt des Hauptkörpers geformt ist, der mit einem Spitzenende eines Saugschlauchs verbunden ist, dessen Basisende mit einer Saugöffnung einer Saugeinrichtung verbunden ist, wobei die Bürste auf einer peripheren Außenfläche des Hauptkörpers angeordnet ist, und
**dadurch gekennzeichnet, dass** die Saugöffnung an einem Spitzenende des Hauptkörpers geformt ist, um sich in Bezug auf die Längsrichtung schräg zu öffnen.

2. Vorrichtung zur Reinigung eines Ankerbolzenlochs nach Anspruch 1, wobei der Hauptkörper einen Basisendabschnitt, der ein gerades röhrenförmiges Gebilde ist, und einen Abschnitt beinhaltet, der sich von einem unteren Ende des Basisendabschnitts zur Saugöffnung unterhalb des unteren Endes erstreckt und der ein sich verjüngender röhrenförmiger Körper ist, dessen Durchmesser sich nach unten hin allmählich verringert.

3. Vorrichtung zur Reinigung eines Ankerbolzenlochs nach Anspruch 1 oder 2, wobei die Bürste auf der peripheren Außenfläche des Hauptkörpers spiralförmig angeordnet ist.

4. Vorrichtung zur Reinigung eines Ankerbolzenlochs nach Anspruch 1 oder 2,
wobei eine Mehrzahl von Bürsten mit Ringform an unterschiedlichen Höhen auf der peripheren Außenfläche des Hauptkörpers angeordnet ist.

## Revendications

1. Dispositif de nettoyage pour trou de boulon d'ancrage, qui est pourvu d'une brosse sur sa partie périphérique et permet d'ôter la poussière de perçage adhérant à la surface périphérique intérieure d'un trou,
le dispositif de nettoyage pour trou de boulon d'ancrage comprenant une buse d'aspiration pouvant être insérée dans un trou de boulon d'ancrage afin d'aspirer la poussière de perçage, la buse d'aspiration comprenant un corps principal consistant en un corps tubulaire, une ouverture d'aspiration formée en une partie terminale d'extrémité du corps principal, et une ouverture d'échappement qui est formée en une partie terminale de base du corps principal et qui est destinée à être raccordée à une extrémité d'un tuyau d'aspiration dont l'extrémité de base est raccordée à une ouverture d'aspiration d'un dispositif d'aspiration,
dans lequel la brosse est disposée sur la surface périphérique extérieure du corps principal, et
**caractérisé en ce que**
l'ouverture d'aspiration est formée à une extrémité du corps principal de sorte à présenter une ouverture oblique par rapport au sens longitudinal.

2. Dispositif de nettoyage pour trou de boulon d'ancrage selon la revendication 1, dans lequel le corps principal comprend une partie terminale de base de forme tubulaire droite, et une partie qui s'étend depuis une extrémité inférieure de la partie terminale de base jusqu'à l'ouverture d'aspiration sous l'extrémité inférieure et qui consiste en un corps tubulaire conique dont le diamètre diminue progressivement dans le sens descendant.

3. Dispositif de nettoyage pour trou de boulon d'ancrage selon la revendication 1 ou 2, dans lequel la brosse est disposée sur la surface périphérique extérieure du corps principal à la manière d'une spirale.

4. Dispositif de nettoyage pour trou de boulon d'ancrage selon la revendication 1 ou 2, dans lequel plusieurs brosses présentant une forme annulaire sont disposées sur différents niveaux de hauteur sur la surface périphérique extérieure du corps principal.
